Europäisches Patentamt

**European Patent Office**

**Office européen des brevets**

(11) Publication number: **0 302 959**
A1

# EUROPEAN PATENT APPLICATION

(21) Application number: 87111712.3

(22) Date of filing: 13.08.87

(51) Int. Cl.⁴: **B32B 17/10 , C03C 27/12**

(43) Date of publication of application:
**15.02.89 Bulletin 89/07**

(84) Designated Contracting States:
**AT BE CH DE ES FR GB GR LI LU NL SE**

(71) Applicant: **ISOCLIMA S.p.A.**
**Via A. Volta 14**
**I-35042 Este Padova(IT)**

(72) Inventor: **Piccioni, Guido**
**Via P.C. Tacito 37**
**35042 Este Province of Padova(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Transparent stratified shatterproof and/or bulletproof panel.**

(57) A transparent stratified shatterproof and/or bulletproof panel is described, consisting of a plurality of plates stably coupled to one another. In order to increase the ballistic resistance of the panel or to reduce the thickness thereof, with a same ballistic resistance, the panel (5) comprises at least two side-by-side arranged polycarbonate plates (7), extending laterally to glass plates (6) and stably joined thereto and with each other by P.V.B. films (8).

Fig. 2

EP 0 302 959 A1

## TRANSPARENT STRATIFIED SHATTERPROOF AND/OR BULLETPROOF PANEL

The present invention relates to a transparent stratified shatterproof and/or bulletproof panel. Shatter- or breakingproof and bullet- or shellproof panels are known which are composed of a plurality of glass plates stably associated with one another by resin films, wherein, in order to avoid dangerous ejections of splinters from the rear plate of the glass towards the interior of the protected region, a plate of polycarbonate is usually applied to said rear glass plate and is also stably coupled to the panel with similar resins or films.

Such known types of stratified panels, which have indeed proved their validity from a practical point of view, however require improvements capable of increasing, in particular, their safety and ballistic resistance characteristics.

It is in fact observed that in known panels a shell which, after passing through the glass plates, reaches the polycarbonate plate, though it is retained thereby, produces in any case a notch effect on said plate.

Since polycarbonate plates are sensitive to the notch effect, it follows that shots which subsequently reach the panel can cause the splitting of the polycarbonate plate at the notch point.

Another disadvantage found in known panels is that, when it is necessary to produce stratified panels with curved surfaces, for example for windshields of cars, the polycarbonate plate currently in use cannot be cold-bent beyond a limited radius but must, before its coupling to the glass plates, be curved with a thermal process which entails a considerable increase both in the complexity and in the duration of the manufacturing process and in the final cost of the product.

The aim of the present invention is to eliminate the disadvantages of known stratified panels by devising a transparent stratified bulletproof and/or shatterproof panel which has an increased ballistic resistance together with a reduced sensitivity to the notch effect, so as to offer higher safety in use.

Within the scope of the aim described above, a particular object is to provide a shatterproof and/or bulletproof panel which, ballistic resistance being equal, has a reduced thickness with respect to the type hitherto normally in use, with a consequent and desirable reduction in weight.

Another important object is to devise a stratified transparent panel which, by virtue of its particular characteristics, allows to eliminate, in the production of panels with curved surfaces, the need for a previous heat-bending of the polycarbonate plate.

Not least object is to obtain a panel having the above described characteristics and which can furthermore be obtained with ordinary plants, without entailing complications in production.

The above aim and objects and others, which will become apparent hereinafter, are achieved by a stratified transparent shatterproof and/or bulletproof panel, as defined in appended claim 1.

The characteristics and advantages of the invention will become apparent from the detailed description of a preferred embodiment of the stratified transparent panel according to the invention, shown exemplarily in the accompanying drawing, wherein:

Fig. 1 is a transverse cross section view of a known stratified panel; and

Fig. 2 is a transverse cross section view of a transparent stratified shatterproof and/or bulletproof panel, according to the invention.

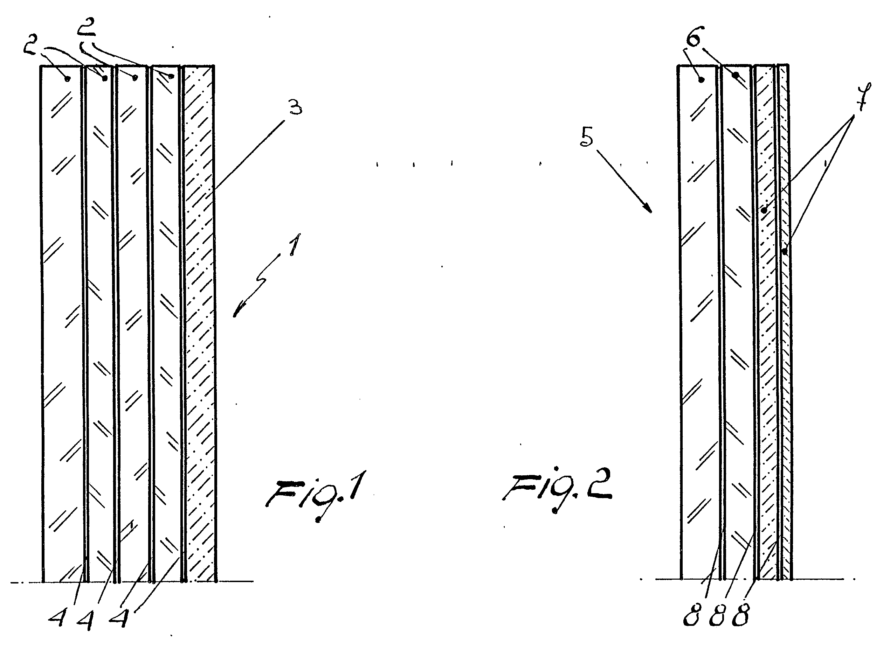

With reference to fig. 1, a known stratified panel, generally indicated at 1, is composed of a plurality of glass plates 2 and of a single plate of polycarbonate 3 which is arranged laterally and, when installed, will be arranged towards the interior of the room to be protected.

All the plates, 2 and 3, are stably joined to one another by layers 4 or films of resin.

With reference now to fig. 2, a stratified transparent shatterproof and/or bulletproof panel, object of the present invention, is generally indicated by the reference numeral 5, and is composed of a plurality of plates stably joined to one another; in the illustrated example two glass plates 6 are joined, according to the invention, to at least two polycarbonate plates 7, arranged mutually side by side.

The polycarbonate plates 7 are arranged on the same side of the glass plates 6, which side, also in this case, will be arranged facing the interior of the room to be protected.

Both the glass plates 6 and the polycarbonate plates 7 are joined to one another by means of layers 8 which can, for example, consist of P.V.B. (polyvinylbutyral) or of other resins.

In practice, the present panel comprises a plurality of polycarbonate plates associated, in asymmetrical compositions, with glass plates.

According to the specific requirements, both the glass plates 6 and the polycarbonate plates 7 can all have the same thickness or have thicknesses which differ from one another.

In the stratified panel 5 the main function of the glass plates 6 is to squeeze the shell while the rearward polycarbonate plates 7 perform the function of retaining the splinters and of contributing to the ballistic resistance of the panel.

In fact it is important to observe that, in the particular structure described with a plurality of polycarbonate plates, the rearward polycarbonate plates are protected by the preceding polycarbonate plates and therefore are not affected by the notch effects due to the impacts and shots already absorbed by the panel; for this reason, too, a stratified panel 5 according to the invention has a higher resistance with respect to known panels 1.

The greater resistance provided by the presence of the multiple polycarbonate plates allows, ballistic resistance being equal, to reduce the thickness of the glass plates, with a consequent reduction of the weight and of the thickness of the panel 5.

In view of the fact that said stratified panels are mostly applied to automotive vehicles, aircraft and ships, it is apparent that a reduction in their thickness reflects in a reduced amount of work required to adapt the seats which accommodate the panels and that the reduction of their weight allows improved operational economy or an increase in payload.

With regard to the production of composite panels with a curved surface, to be used for example as windshields for automotive vehicles, it is important to observe that the polycarbonate plates used in a stratified panel 5 according to the invention are thinner than the polycarbonate plate 3 used in the prior art and therefore have the ability to be curved, even without being heated, and to adapt to the curvature and to the spatial arrangement of the glass plates.

Thus the need to perform a previous heat-curving operation for the polycarbonate is eliminated from the manufacturing process, with considerable and obvious savings both in energy and in used time and therefore, consequently, in costs.

For the sake of descriptive completeness, it should be furthermore conveniently specified that, according to the particular use or to other similar requirements, the outer polycarbonate plate may be: normal, that is to say without any scratch-proof protective coating; hardened, being provided, on its surface, with thin layers of organic paints or of metallic oxides adapted to impart to the plate a resistance to abrasions and scratches; coated, when a film is applied to its surface for protection from scratches and abrasions, said film possibly being, for example, of urethane, polyester, or the like.

Moreover, according to the various uses and to the related requirements, the glass plates 6 may be clear or more or less tinted; said glass plates can also be conveniently coated with metallic oxide coatings, or be subject to thermal or chemical treatments in order to increase their mechanical resistance.

In practice, the materials employed, so long as compatible with the contingent use, as well as the dimensions, may be any according to the requirements and to the state of the art.

## Claims

1. Transparent stratified shatterproof and/or bulletproof panel, consisting of a plurality of plates stably coupled to one another, characterized in that it (5) comprises at least two side-by-side polycarbonate plates (7) arranged laterally to glass plates (6).

2. Transparent stratified panel, according to claim 1, characterized in that said plates (6,7) are joined to one another in a stable manner by means of preferably P.V.B. (polyvinylbutyral) films (8).

3. Transparent stratified panel, according to one or both of the preceding claims, characterized in that the polycarbonate plate (7) arranged outwards is provided with thin surface layers of paints or metallic oxides adapted to impart thereto an increased resistance to abrasions and scratches.

4. Transparent stratified panel, according to one or more of the preceding claims, characterized in that on the surface of the outwardly arranged polycarbonate plate (7) a film, preferably a polyester or urethane film, is applied and is adapted to constitute a scratch-proof protective coating.

Fig.1

Fig.2

EP 0 302 959 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 098 650 (GENERAL ELECTRIC CO.) * Page 2, lines 9-16,43-46,51-59,74-85; page 3, lines 19-21,44-54,102-114; page 4, lines 12-14 * | 1-4 | B 32 B 17/10 C 03 C 27/12 |
| X | EP-A-0 157 646 (PILKINGTON BROTHERS P.L.C.) * Abstract; page 1, lines 1-6; page 2, lines 3-11, paragraph 5; page 3, paragraph 8; claims * | 1,4 | |
| X | FR-A-2 574 779 (BOUSSOIS S.A.) * Page 2, lines 9-21; page 4, lines 16-34; abstract; figure 1 * | 1,2 | |

TECHNICAL FIELDS SEARCHED (Int. Cl.4)

B 32 B
C 03 C

The present search report has been drawn up for all claims

| Place of search | Date of completion of the search | Examiner |
|---|---|---|
| THE HAGUE | 08-04-1988 | VAN BELLEGHEM W.R. |